# EUROPEAN PATENT APPLICATION

(11) **EP 4 716 271 A1**
(43) Date of publication of application: **25.03.2026**
(21) Application number: 24306553.9
(22) Date of filing: 20.09.2024
(51) Int. Cl.: H04W 12/08, G07C 9/00, H04W 4/80, H04W 12/50

(54) **METHOD AND DEVICE FOR ALLOWING COMMUNICATIONS BETWEEN A SERVER AND A NON-CONNECTED DEVICE STORING A DIGITAL KEY FOR ACCESSING A VEHICLE**

(71) Applicant: IDEMIA France, 92400 Courbevoie (FR)
(72) Inventor: KORANGA, Devendra, Singh, 92400 COURBEVOIE (FR); UGLIETTI, Gianni, 92400 COURBEVOIE (FR)
(74) Representative: Regimbeau

(57) **Abstract**

Method comprising: establishing (400) a first communication channel with an access device storing a digital key for allowing an owner of the access device to access an internal space of a vehicle; establishing (402) a second communication channel with a server storing pairing data about vehicles and access devices paired with vehicles; receiving (404) a request sent by the access device in the first communication channel, the request containing data indicating that the access device has been paired with the vehicle; sending (406) the request to the server via the second communication channel; receiving (408) a response sent by the server in the second communication channel in response to the request; and sending (410) the response to the access device via the first communication channel.

## Description

### TECHNICAL FIELD

This disclosure relates to a method involving an access device for allowing a user to access an internal space of a vehicle, and a server, and further relates to a communication device for carrying out said method.

### BACKGROUND

The most common way to secure an access to a cabin of a vehicle is a physical key which can be mechanically coupled with a lock of the vehicle. Other parts of the vehicle can also be accessed by using a physical key, for example the trunk, the gas trap, the doors.

Then it has been proposed to use a digital key in addition to or instead of a physical key. The digital key is stored in the memory of an access device that communicates wirelessly with the vehicle to unlock an entire vehicle or part of the vehicle like for example at least one door, the trunk, the gas trap.

Firstly, access devices specialized for these tasks were proposed, conventionally called "key fobs". Said key fobs can communicate wirelessly with vehicles at a short distance (for instance, using the RF (for Radio Frequency) technology

Secondly, it has been proposed to use more generic user equipment, such as smartphones, as access devices. Instead of using a dedicated key fob, the user merely installs an application provided by the manufacturer of the vehicle on his user equipment. The application can initiate a pairing process between the user equipment and the vehicle. A digital key is created during the pairing process.

Standards for implementing such a pairing process and other processed related to the management of digital keys have been proposed.

Some of said standards require a communication between the access device and a remote server. For instance, the CCC Digital Key standard established by the Car Connectivity Consortium requires a communication between the access device and a remote server referred to as "Key Tracking Server".

However, a major drawback of such standards is that they cannot be implemented on key fobs, since key fobs are not designed to communicate with remote servers.

### SUMMARY

A technical problem to be solved is to overcome this limitation.

This technical problem is solved by a method carried out by a communication device and by the communication device.

The method carried out by the communication device comprises: establishing a first communication channel with an access device storing a digital key for allowing an owner of the access device to access an internal space of a vehicle; establishing a second communication channel with a server storing pairing data about vehicles and access devices paired with vehicles; receiving a request sent by the access device in the first communication channel, the request containing data indicating that the access device has been paired with the vehicle; sending the request to the server via the second communication channel; receiving a response sent by the server in the second communication channel in response to the request; and sending the response to the access device via the first communication channel.

The communication device comprises: a first communication interface for establishing a first communication channel with an access device storing a digital key for allowing an owner of the access device to access an internal space of a vehicle; a second communication interface for establishing a second communication channel with a server storing pairing data about vehicles and access devices paired with vehicles; and a processing unit. The processing unit is configured to: detect that the first communication interface receives a request sent by the access device in the first communication channel, the request containing data indicating that the access device has been paired with the vehicle; cause the second communication interface to send the request to the server via the second communication channel; detect that the second communication interface receives a response sent by the server in the second communication channel in response to the request; and cause the first communication interface to send the response to the access device via the first communication channel.

In fact, the communication device acts as a proxy between the access device and the server. It provides the access device with connectivity to the server. Therefore, recent standards requiring the use of remote server can be implemented in the access device even though the access device has limited connectivity.

The method carried out by the communication device (or the device itself, when applicable) may further comprise optional features, some of which are listed below.

Optionally, the first communication channel complies with at least one of the following standards: Near Field Communication (NFC), Bluetooth Low Energy (BLE), or Legacy Radio Frequency (RF) operating at 125 kHz or 433 MHz.

In an embodiment, the access device is a passive card, such as an NFC key card. In another embodiment, the access device is a key fob.

Optionally, a cellular antenna of the communication device sends the request and receives the response.

Optionally, the request is a Track Key Request as defined in CCC Digital Key standard release 2.0 or 3.0, and/or the server is a Key Track Server as defined in CCC Digital Key standard release 2.0 or 3.0.

Optionally, the communication device is a component of the vehicle.

Optionally, the communication device is a user equipment storing a second digital key for allowing an owner of the user equipment to access the internal space of the vehicle.

A further aspect of the present disclosure is a computer program product comprising code instructions for causing a communication device to perform the method described above.

Another aspect of the present disclosure is a system comprising: an access device storing a digital key for allowing an owner of the access device to access an internal space of a vehicle, and the communication device.

The system may further comprise the server storing pairing data about vehicles and access devices paired with vehicles, and which is configured to receive the request and send the response.

Optional but advantageous features of the method and/or of the communication device are recited in the dependent claims.

### BRIEF DESCRIPTION OF THE FIGURES

Further details, features and advantages are explained in more detail below with the aid of exemplary embodiments that are illustrated in the figures.
Figure 1 schematically depicts a system including a car and other components communicating with each other, according to an embodiment.
Figure 2 shows components of a communication device, according to an embodiment.
Figure 3 shows steps of a method carried out by the components shown in figures 1 and 2, according to an embodiment.

### DETAILED DESCRIPTION OF EMBODIMENTS

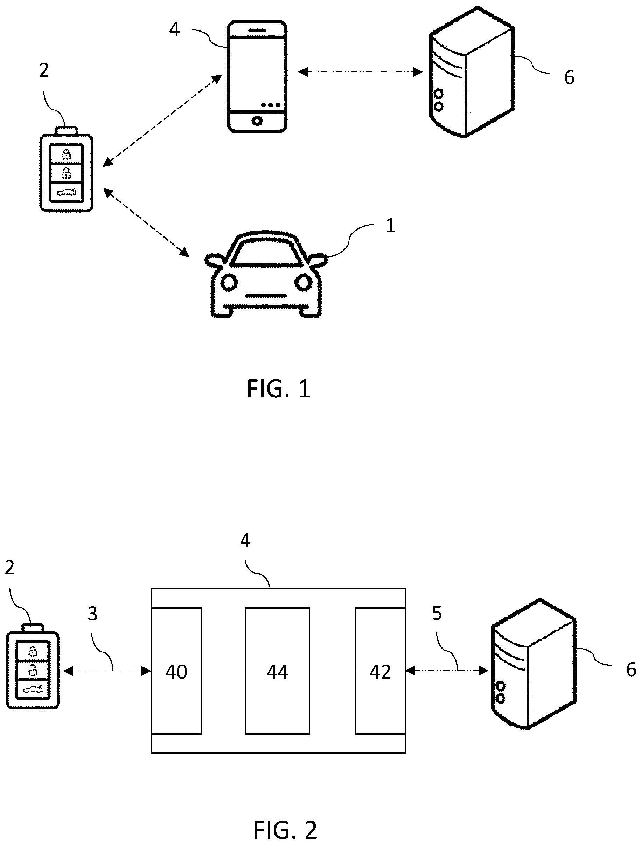

Referring to figure 1, a system comprises a vehicle 1, an access device 2, a communication device 4 and a server 6.

The vehicle 1 has an internal space and at least one opening which can be closed or opened to allow a user to access to the internal space. The vehicle 1 further comprises a lock for locking and unlocking the opening. The vehicle 1 further comprises a wireless communication interface for receiving commands for locking or unlocking the door using the lock. In the following, an embodiment wherein the internal space is a cabin and wherein the opening is a door will be described. However, it should be noted that the present invention is not only limited to locking or unlocking only doors of the vehicle. Locking or unlocking the doors of the vehicle has been chosen to simplify the understanding of the invention. For example, the invention is applicable for locking or unlocking other parts of the vehicle such as the trunk, the gas trap, the windows.

The vehicle 1 may be a land vehicle 1, such as a car.

The access device 2 is a physical token allowing a user to access to the cabin vehicle 1. The access device 2 comprises a wireless communication interface able to send lock or unlocking commands to the wireless communication interface of the cabin or vehicle, to lock or unlock the door using the lock. Thus, the access device 2 plays the same role as a physical key which would be mechanically coupled with the lock.

For that purpose, the access device 2 has to be paired with the vehicle 1 thanks to a known pairing process. During the pairing process, the access device 2 and the vehicle 1 communicate with each other and share a digital key, which may be created by the access device 2. The digital key is eventually stored in a memory of the access device 2.

The wireless communication interface of the access device 2 may be compliant with any of the following communication protocols:
- NFC (Near Field Communication),
- BLE (Bluetooth Low Energy), preferably in combination with UWB (Ultra-Wideband),
- legacy RF operating, for example, at 125 kHz or 433 MHz.

In an embodiment, the access device 2 is a key fob. The key fob comprises a housing storing the wireless communication interface, the memory storing the digital key, and a battery for power the electrical components of the key fob. The key fob may further comprise buttons arranged on the housing to control the lock of the car remotely by causing corresponding commands to be send by the wireless communication interface, for instance a first button for locking the door and a second button for unlocking the door (as illustrated in figure 1).

In another embodiment, the access device 2 is an NFC key card. In this embodiment, the wireless communication interface is of the NFC type. The NFC key card is a passive component or card in the sense that it does not comprise any power supply. The NFC key card is rather powered by an external device in communication with the NFC key card (such as the wireless communication interface of the vehicle 1).

The access device 2 is not a "connected" device in the sense it does not have the capability to access a service provided by a telecommunication network, for example Internet. More particularly, the access device 2 is devoid of any cellular antenna, Wi-Fi (for Wireless Fidelity) antenna, or subscription providing such an access through a cellular network (such as 3G, 4G or 5G network) or Wi-Fi network. Consequently, the access device 2 is not able to communicate with the server 6.

The server 6 comprises (or has access to) a memory storing a database. The database contains pairing data about vehicles and access devices paired with the vehicles. Thanks to the pairing data, the server 6 is aware of the access device(s) a given vehicle 1 has been paired with as a result of the pairing process mentioned above.

The server 6 further comprises a server communication interface (not shown in the figure for the sake of clarity) for accessing the Internet or for communicating with external entities of any type, for example other servers, communication devices, antenna, networks, ... The communication interface can be an any type.

Ther server 6 may be part of an infrastructure in charge of revoking or terminating digital keys in specific cases, for instance whenever an access device is lost by its legitimate owner. It is to be noted that the server 6 does not store digital keys, but store data identifying access devices storing digital keys.

Referring to the figure 2 the communication device 4 comprises a first communication interface 40 for communicating with the access device 2. The first communication interface 40 and the wireless communication interface of the access device 2 are of the same type. For instance, the first communication interface 40 is of the NFC type when the access device 2 is an NFC key card. The first communication interface 40 and the wireless communication interface of the access device 2 allow the establishment of a first communication channel 3 between the communication device 4 and the access device 2. The term "communication channel" has to be understood as a virtual channel which allow the exchange or transfer, between at least two entities, of any type of data.

The communication device 4 further comprises a second communication interface 42 for communicating with the server 6. The second communication interface 42 is wireless. In an embodiment, the second communication interface 42 comprises a cellular antenna, i.e. an antenna able to connect to a cellular network, said cellular network forming a portion of a second communication channel 5 between the communication device 4 and the server communication interface of the server 6. In another embodiment, the second communication interface 42 is of the Wi-Fi type.

The second communication interface 42 may have a larger range than the first communication interface 40.

The communication device 4 further comprises a processing unit 44. The processing unit 44 may comprise a memory for storing a computer program comprising code instructions, and a processor for executing said computer program. The processor comprises one or more cores. When the code instructions of the program are executed by the processor, the processor performs steps that will be detailed hereinafter. The processor is an electronic circuit of any type.

In an embodiment, the communication device 4 is a user equipment such as a smartphone (as schematically depicted in figure 1) or a smart watch. The user equipment may store a second digital key for allowing an owner of the user equipment to access the cabin of the vehicle or other parts of the vehicle (for example the trunk, the gas trap, ...) or functions of the vehicle (for example start engine). The user equipment may also store and run an application provided by a manufacturer of the vehicle 1, for example allowing a user to starting a pairing process between the user equipment and the vehicle 1.

In another embodiment, the communication device 4 is a component of the vehicle 1. In this embodiment, the communication device 4 may be connected to the lock via a wireless or a wired connection.

In the following, it will be discussed a non-limiting embodiment (referred to as "CCC embodiment") wherein the access device 2 and the server 6 are compliant with at least one release of the CCC Digital Key standard established by the Car Connectivity Consortium, including releases 2.0 and 3.0 of said standard. In particular, release 3.0 of said standard is described in technical specification CCC-TS-101 available here: https://carconnectivity.org/digital-key-release-3-0-specification-download/.

In the CCC embodiment:
- the access device 2 is a "Device" as defined in the CCC Digital Key standard release 2.0 or 3.0, able to be paired with a vehicle (see for instance section 2.4.7 of technical specification CCC-TS-101 version 1.2.3).
- the server 6 is a "Key Tracking Server" as defined in the CCC Digital Key standard release 2.0 or 3.0 (see for instance section 2.4.6 of technical specification CCC-TS-101 version 1.2.3).

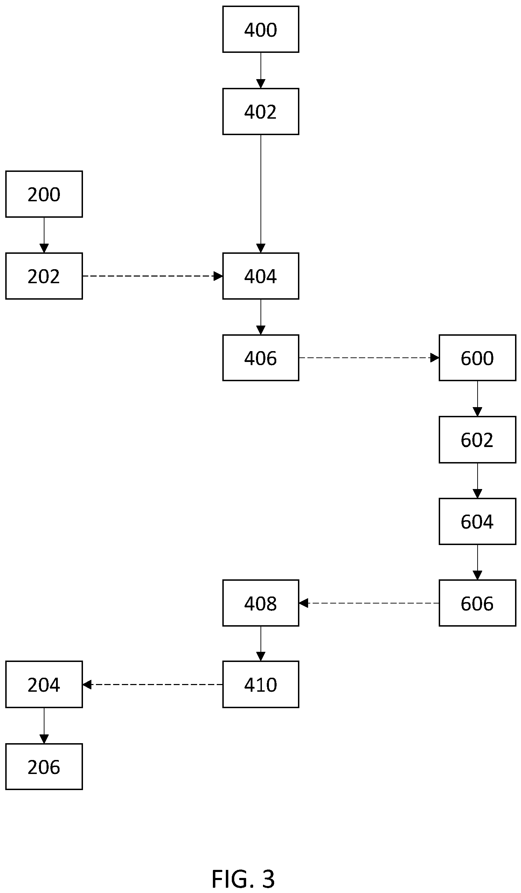

A method carried out by the system discussed above comprises the following steps with reference to figure 3.

By convention, steps carried out by the access device 2 are numbered 2XX, step carried out by the communication device 4 are numbered 4XX, and steps carried out by the server 6 are numbered 6XX.

In step 400, the communication device 4 establishes the first communication channel 3 with the access device 2. More precisely, the first communication channel is established between the first communication interface 40 of the communication device 4 and the wireless communication interface of the access device 2.

In step 402, the communication device 4 establishes the second communication channel 5 with the server 6. More precisely, the second communication channel is established between the second communication interface 42 of the communication device 4 and the server communication interface of the server 6. The second communication channel may pass through a cellular network.

At some point, the access device 2 and the vehicle 1 carry out a known pairing process. During this pairing process, the access device 2 creates a digital key, and shares it via its wireless communication interface with the vehicle 1.

Once the pairing process is completed, the access device 2 generates a request containing data indicating that the access device 2 has been paired with the vehicle 1 (step 200). The recipient of the request is the server 6. However, as explained above, the access device 2 cannot send it directly to the server 6.

In the CCC embodiment, the request is a "Track Key Request" as defined in the CCC Digital Key standard release 2.0 or 3.0.

In step 202, the access device 2 sends the request in the first communication channel established with the communication device 4.

In step 404, the communication device 4 receives the request sent by the access device 2, and the processing unit 44 detects this event.

In step 406, the processing unit 44 causes the second communication interface 42 to send the request in the second communication channel established with the server 6.

In step 600, the server 6 receives the request.

In step 602, the server 6 processes the request. This process may for instance comprise adding in the database information indicating that the access device 2 has been paired with the vehicle 1.

In step 604, the server 6 generates a response to the request.

In the CCC embodiment, the response is a response to the "Track Key Request" as defined in the CCC Digital Key standard release 2.0 or 3.0. This response is referred to as "KTS response" or "Key Tracking Receipt" in said releases.

In step 606, the server communication interface of the server 6 sends the response in the second communication channel established with the communication device 4.

In step 408, the communication device 4 receives the response sent by the server 6, and the processing unit 44 detects this event.

In step 410, the processing unit 44 causes the first communication interface 40 of the communication device 4 to send the response in the first communication channel established with the access device 2.

In step 204, the access device 2 receives the response.

In the CCC embodiment, the access device 2 processes the response in accordance with the CCC Digital Key standard release 2.0 or 3.0.

If the access device 2 is not a component of the vehicle, the access device 2 sends the request to the vehicle 1 in step 206. It is to be noted that step 206 is optional, since the access device 2 may be a component of the vehicle 1. In this case, the vehicle 1 has received the response at step 204.

## Claims

1. Method carried out by a communication device, the method comprising:
• establishing (400) a first communication channel with an access device storing a digital key for allowing an owner of the access device to access an internal space of a vehicle,
• establishing (402) a second communication channel with a server storing pairing data about vehicles and access devices paired with vehicles,
• receiving (404) a request sent by the access device in the first communication channel, the request containing data indicating that the access device has been paired with the vehicle,
• sending (406) the request to the server via the second communication channel,
• receiving (408) a response sent by the server in the second communication channel in response to the request, and
• sending (410) the response to the access device via the first communication channel.

2. Method of claim 1, wherein the first communication channel complies with at least one of the following standards:
• Near Field Communication (NFC),
• Bluetooth Low Energy (BLE),
• Legacy Radio Frequency (RF) operating at 125 kHz or 433 MHz.

3. Method of any of claims 1 to 2, wherein the access device is a passive card, such as an NFC key card.

4. Method of any of claims 1 to 2, wherein the access device is a key fob.

5. Method of any of the preceding claims, wherein a cellular antenna of the communication device sends the request and receives the response.

6. Method of any of the preceding claims, wherein:
• the request is a Track Key Request as defined in CCC Digital Key standard release 2.0 or 3.0, and/or
• the server is a Key Track Server as defined in CCC Digital Key standard release 2.0 or 3.0.

7. Method of any of the preceding claims, wherein the communication device is a component of the vehicle.

8. Method of any of claims 1 to 6, wherein the communication device is a user equipment storing a second digital key for allowing an owner of the user equipment to access the internal space of the vehicle.

9. Computer program product comprising code instructions for causing a communication device to perform the method of any of the preceding claims.

10. Communication device (4) comprising:
• a first communication interface (40) for establishing a first communication channel (3) with an access device (2) storing a digital key for allowing an owner of the access device (2) to access an internal space of a vehicle (1),
• a second communication interface (42) for establishing a second communication channel (5) with a server (6) storing pairing data about vehicles and access devices paired with vehicles,
• a processing unit (44) configured to:
• detect that the first communication interface (40) receives a request sent by the access device (2) in the first communication channel, the request containing data indicating that the access device (2) has been paired with the vehicle (1),
• cause the second communication interface (42) to send the request to the server (6) via the second communication channel,
• detect that the second communication interface (42) receives a response sent by the server (6) in the second communication channel in response to the request; and
• cause the first communication interface (40) to send the response to the access device (2) via the first communication channel.

11. System comprising:
• an access device (2) storing a digital key for allowing an owner of the access device (2) to access an internal space of a vehicle (1), and
• the communication device (4) of claim 10.

12. System of the preceding claim, further comprising:
• a server (6) storing pairing data about vehicles and access devices paired with vehicles, the server being configured to receive the request and send the response.
